# EUROPEAN PATENT SPECIFICATION

(11) **EP 1 776 905 B1**
(45) Date of publication and mention of the grant of the patent: **26.12.2007**
(21) Application number: 05425739.9
(22) Date of filing: 21.10.2005
(51) Int. Cl.: A47J 31/44

(54) **A method for heating and whipping milk and a device for carrying out the method**
Verfahren zum Aufwärmen und Schäumen von Milch und Vorrichtung um dieses Verfahren auszuführen
Procédé pour chauffer et mousser du lait et dispositif pour exécuter ce procédé

(43) Date of publication of application: 25.04.2007
(73) Proprietor: Gruppo Cimbali S.p.A., 20082 Binasco (MI) (IT)
(72) Inventor: Coccia, Andrea, 20082 Binasco MI (IT); Sala, Dario, 20082 Binasco MI (IT)
(74) Representative: Perani, Aurelio

(56) References cited:
- WO-A-03/092458
- US-A- 4 800 805
- US-A1- 2003 106 433

## Description

The present invention relates to a method for automatically heating and whipping milk, in particular for preparing cappuccino in coffee machines, in which the heating and whipping of the milk are carried out by the combined action of a flow of vapour, which is dispensed by a boiler which produces water vapour, and a flow of compressed air, which is dispensed by an associated source of compressed air.

In particular, the present invention also relates to a device for heating and whipping milk with the heating temperature and the quantity of foam produced being controlled in a manner suitable for carrying out the method according to the invention.

The operations for heating and whipping the milk for producing cappuccino which, as is known, is a drink containing coffee and whipped milk, are generally carried out by directing a jet of vapour and compressed air into a container, for example, a jug, containing cold milk via a spout which is positioned at the end of a vapour pipe, which is generally provided with a cut-off valve for controlling the flow of vapour.

Devices for heating and whipping milk, of the above-mentioned type, are known in the prior art because they offer the advantage of being able to carry out whipping of the milk with a quantity of foam and at a temperature desired.

A known solution in the art provides for the use, as set out in WO 03/092458, of a device comprising a boiler which produces vapour, directing means which are provided with an open end which can be immersed in a jug containing the milk to be heated and whipped, a first pipe for supplying the vapour connected between the boiler and the directing means, a cut-off member positioned in the first pipe, a compressor for producing compressed air, a motor for actuating the compressor, a second pipe for supplying the compressed air connected between the compressed air compressor and the directing means, an element which is sensitive to temperature and which is associated with the immersible end of the directing means in order to detect the temperature of the milk in the container, and a control unit which is connected to the cut-off member, the compressor for producing compressed air and the element which is sensitive to temperature.

In accordance with the above-illustrated technical solution, the flow of compressed air is adjusted by means of a throttle which is calibrated, or also adjustable, and which is positioned downstream of the compressor, in the pipe which connects the source of air to the directing means which are immersed in the milk contained in the jug.

As is known, in circuits downstream of an air compressor, the humidity present in the air condenses as a result of the increase in the pressure to which the air is subjected.

That phenomenon sometimes brings about poor operating conditions for the device because the condensed water tends to block the throttle. Since the throttle has dimensions for withstanding air resistance, it has a through-hole of small dimensions that is not suitable for the flow of a liquid having the viscosity of water.

Under such conditions, consequently, the compressed air cannot be dispensed to the directing means, which in practice only the flow of vapour reaches, bringing about the lack of whipping of the milk and therefore the absence of foam.

The object of the present invention is to carry out a method for heating and whipping the milk which can overcome the disadvantages indicated and set out above in relation to devices which make use of a compressor for supplying compressed air to the device for whipping the milk.

The object is achieved by means of the method of claim 1 below.

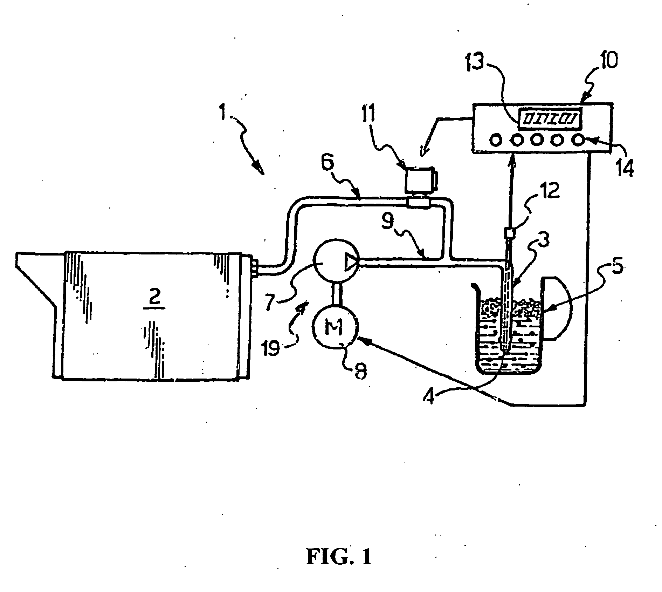

The invention will now be described in greater detail with reference to a device which can carry out the method which is schematically illustrated in the single Figure of the appended drawings.

In the embodiment illustrated in that Figure, the device 1 for heating and whipping the milk comprises a boiler 2 which produces water vapour and a directing pipe 3 which is provided with an open end 4 which can be immersed in a jug 5 containing milk.

The boiler 2 for producing vapour can be of the type conventionally provided in a machine for preparing coffee, in particular espresso coffee, whether of the manual type or the type with automatic operation.

Furthermore, the device 1 includes a first pipe 6 for supplying the vapour, a cut-off valve 11 which is positioned in the first pipe 6, a source 19 of compressed air and a second pipe 9 for supplying the compressed air.

The source 19 of compressed air preferably, but not exclusively, comprises, as illustrated in the Figure, a compressor 7 which is actuated by an electric motor 8. The source of compressed air allows the production and supply of compressed air.

The directing pipe 3 directs a jet of vapour and compressed air through the open end 4, from the first pipe 6 and the second pipe 9, respectively, into the container 5. The directing means 3, in the construction illustrated, is preferably a pipe which can be orientated as desired, optionally a flexible pipe, so as to facilitate its insertion into the container 5, for example, a jug, and to allow complete immersion of the open end 4 in the milk to be heated and whipped.

The heating and whipping of the milk are controlled by a control unit 10 which is connected to the vapour cut-off valve 11, the motor 8 of the pump 7 for the air and, in addition, a temperature transducer 12 which is connected to the immersible end 4 of the directing means 3 and which can detect the temperature of the milk when the end 4 is immersed in the milk.

The temperature transducer 12 is advantageously an element which is sensitive to temperature, such as, for example, a thermocouple, a thermoresistor, and the like, whose output magnitude, at the input to the control unit 10, is by nature electrical in a preferable but not exclusive manner.

The control unit 10 comprises, in a simplified form thereof, a programmable CPU (not illustrated), a display 13 and a series of push-buttons 14 which are connected to the CPU. The unit 10 is supplied by a source of electrical power which is not shown in the Figures.

The CPU associates a series of operations to be carried out with each push-button 14. The operations to be carried out depend on the desired temperature and/or whipping of the milk.

For the control unit 10, in accordance with the push-button actuated, immediately detects the temperature of the milk by means of the transducer 12 in order to act both on the valve 11 for cutting off the vapour, advantageously a solenoid valve, and on the source 19 of compressed air, in the first case controlling the opening and closing of the valve 11 and, in the second case, actuating the source 19 of compressed air, one independently of the other, in accordance with the temperature of the milk. Alternatively, it is further possible to control the opening of the valve 11 and/or to actuate the source 19 of compressed air for a predetermined period of time.

In accordance with the present invention, the pipe 9 for supplying the flow of compressed air is not provided with throttle members. The control of the necessary flow of air is brought about, in accordance with the invention, by the compressor 7 being actuated for short pulses which are determined by the electric motor 8 under the control of the control unit 10 and the adjustment of the flow is brought about by the durations of the intervals being varied.

In practice, it has been found that, for example, in order to obtain a high level of whipping of the milk, for each unitary pulse of air, for example, equal to one second, the interval between one pulse and the next must be equal to the same unit, that is to say, equal to one second.

Should it be desirable to obtain a medium/high level of whipping, with the unitary pulse for pumping the air still set at a level equal to one second, the intervals would have to be equal to two units, that is to say, 2 seconds each.

For a medium/low level of whipping, however, still for a given duration of one second for the unitary pulse, the intervals must be sustained for a duration equal to three units of time, that is to say, 3 seconds each.

Finally, for a low level of whipping, still for a given unitary duration for the pulses of air, the duration of the intervals between the pulses must be sustained for a duration equal to four units, that is to say, 4 seconds.

In accordance with the invention, a better quality of whipping of the milk is obtained by causing the flow to start with pulses of compressed air when the milk in the jug 5 is already in a turbulent state owing to the vapour already having been introduced, still under the control and command of the control unit 10.

Advantageously, therefore, it is necessary to start the flow cycle with pulses of compressed air and a specific time delay with respect to the start of the cycle for admitting the vapour, which delay is determined by the milk reaching a specific temperature threshold, for example, 30°C.

The invention is not restricted to the above-described embodiment alone, but instead comprises a number of embodiments, all falling within the scope of the invention, as claimed hereinafter.

## Claims

1. A method for automatically heating and whipping milk, in particular for preparing cappuccino in coffee machines, in which the heating and whipping of the milk are carried out by the combined action of a flow of vapour, which is dispensed by a boiler (2) which produces water vapour, and a flow of compressed air, which is dispensed by an associated source (19) of compressed air, **characterized in that** the flow of compressed air is constituted by pulses which have a predetermined duration and which are intercalated in inactive periods.

2. A method according to claim 1, wherein the duration of the pulses of compressed air is constant and equal during the dispensing of the flow of compressed air.

3. A method according to claims 1 and 2, wherein the inactive periods intercalated between the pulses of compressed air have a duration equal to that of the pulses.

4. A method according to claims 1 and 2, wherein the inactive periods intercalated between the pulses of compressed air have a duration which is a multiple of the duration of the pulses.

5. A method according to any one of claims 1 to 4, **characterized in that** the flow of air in pulses is dispensed with a predetermined delay with respect to the start of the dispensing of the flow of vapour.

6. A device (1) for heating and whipping milk, in particular for preparing cappuccino in coffee machines, comprising:
- a boiler (2) which produces vapour,
- directing means (3) which are provided with an open end (4) which can be immersed in a container (5) containing milk,
- a first pipe (6) for supplying the vapour, which pipe is connected between the boiler (2) and the directing means (3),
- a cut-off member (11) which is positioned in the first pipe,
a compressor (7) for producing compressed air, a motor (8) for actuating the compressor (7),
- a second pipe (9), for supplying the compressed air, which pipe is connected between the compressor (7) for compressed air and the directing means (3),
- an element (12) which is sensitive to temperature and which is associated with the immersible end (4) of the directing means (3) in order to detect the temperature of the milk in the container (5),
a control unit (10) which is connected to the cut-off member (11), the compressor (7) which produces compressed air and the element (12) which is sensitive to the temperature of the milk, the control unit (10) being programmable in order to control the opening and closing of the cut-off member (11) and to actuate the compressor (7) for compressed air, in accordance with the desired temperature and/or whipping for the milk, **characterized in that** the control unit is configured to actuate the compressor (7) for compressed air in an intermittent manner, producing pulses of compressed air for predetermined periods of time which are alternated with inactive periods.

7. A device according to claim 6, wherein the inactive periods have a variable duration.

8. A device according to claims 6 and 7, wherein the periods of time for the pulses of compressed air have a duration which is constant and equal during the dispensing of the flow of compressed air.

## Patentansprüche

1. Verfahren zum automatischen Erhitzen und Aufschäumen von Milch, im Besonderen zum Zubereiten von Capuccino in Kaffeemaschinen, in denen das Erhitzen und Aufschäumen der Milch durch das Zusammenwirken des Fließens von Dampf, der durch einen Wasserdampf erzeugenden Erhitzer (2) ausgestoßen wird, und dem Fließen von Druckluft, die durch eine zugehörige Druckluftquelle (19) ausgestoßen wird, durchgeführt werden, **dadurch gekennzeichnet, dass** das Fließen von Druckluft durch Stöße gebildet wird, die eine bestimmte Dauer haben und die in inaktiven Zeitspannen eingeschoben werden.

2. Verfahren gemäß Anspruch 1, wobei die Dauer der Druckluftstöße während dem Ausstoßen des Druckluftflusses konstant und gleich ist.

3. Verfahren gemäß Anspruch 1 und 2, wobei die inaktiven Zeitspannen, die zwischen den Druckluftstößen eingeschoben werden, die gleiche Dauer wie die Druckluftstöße haben.

4. Verfahren gemäß Anspruch 1 und 2, wobei die inaktiven Zeitspannen, die zwischen den Druckluftstößen eingeschoben werden, ein Mehrfaches der Dauer der Druckluftstöße aufweisen.

5. Verfahren gemäß einem der Ansprüche 1 bis 4, **dadurch gekennzeichnet, dass** das Fließen von Luft in den Druckluftstößen mit einer bestimmten Verzögerung bezüglich des Beginns des Ausstoßes des Dampfflusses ausgestoßen wird.

6. Vorrichtung (1) zum Erhitzen und Aufschäumen von Milch, im Besonderen für die Zubereitung von Cappuccino in Kaffeemaschinen, aufweisend:
- einen Erhitzer (2), der Dampf erzeugt,
- Leitungsmittel (3), die mit einem offenen Ende (4) ausgebildet sind, die in einen Behälter (5) mit Milch eingetaucht werden können,
- ein erstes Rohr (6) zur Dampfzufuhr, wobei das Rohr zwischen dem Erhitzer (2) und den Leitungsmitteln (3) eingebunden ist,
- ein Abschaltelement (11), das im ersten Rohr angeordnet ist,
einen Kompressor (7) zum Erzeugen von Druckluft,
einen Motor (8) zum Betreiben des Kompressors (7),
- ein zweites Rohr (9) zur Druckluftzufuhr, wobei das Rohr zwischen dem Kompressor (7) für die Druckluft und den Leitungsmitteln (3) eingebunden ist,
- ein temperaturempfindliches Element (12), das mit dem versenkbaren Ende (4) der Leitungsmittel (3) verbunden ist, um die Temperatur der Milch im Behälter (5) zu messen,
eine Steuereinheit (10), die mit dem Abschaltelement (11) , dem Kompressor (7), der die Druckluft erzeugt, und dem Element (12), das die Temperatur der Milch erfasst, verbunden ist, wobei die Steuereinheit (10) programmierbar ist, um das Öffnen und Schließen des Abschaltelements (11) zu steuern und den Kompressor (7) für Druckluft gemäß der gewünschten Temperatur und/oder dem Aufschäumen von Milch zu betätigen, **dadurch gekennzeichnet, dass** die Steuereinheit ausgestaltet ist, um den Kompressor (7) für Druckluft in intermittierender Weise zu betreiben, wobei Druckluftstöße für bestimmte Zeitspannen erzeugt werden, die mit inaktiven Zeitspannen abwechseln.

7. Vorrichtung gemäß Anspruch 6, wobei die inaktiven Zeitspannen eine variable Dauer aufweisen.

8. Verfahren gemäß Anspruch 6 und 7, wobei die Zeitspannen für die Druckluftstöße eine Dauer aufweisen, die während des Ausstoßens des Druckluftflusses konstant und gleich ist.

## Revendications

1. Procédé pour chauffer et faire mousser automatiquement du lait, en particulier pour la préparation de cappuccino dans des machines à café, dans lequel le chauffage et le moussage du lait sont réalisés par l'action combinée d'un écoulement de vapeur, qui est distribué par une bouilloire (2) qui produit de la vapeur d'eau, et un écoulement d'air comprimé, qui est distribué par une source associée (19) d'air comprimé, **caractérisé en ce que** l'écoulement d'air comprimé est constitué par des impulsions qui ont une durée prédéterminée et qui sont intercalées dans des périodes inactives.

2. Procédé selon la revendication 1, dans lequel la durée des impulsions d'air comprimé est constante et égale pendant la distribution de l'écoulement d'air comprimé.

3. Procédé selon les revendications 1 et 2, dans lequel les périodes inactives intercalées entre les impulsions d'air comprimé ont une durée égale à celle des impulsions.

4. Procédé selon les revendications 1 et 2, dans lequel les périodes inactives intercalées entre les impulsions d'air comprimé ont une durée qui est un multiple de la durée des impulsions.

5. Procédé selon l'une quelconque des revendications 1 à 4, **caractérisé en ce que** l'écoulement d'air en impulsions est distribué avec un retard prédéterminé par rapport au début de la distribution de l'écoulement de vapeur.

6. Dispositif (1) pour chauffer et faire mousser du lait, en particulier pour la préparation de cappuccino dans des machines à café, comprenant :
une bouilloire (2) qui produit de la vapeur,
des moyens de direction (3) qui sont munis d'une extrémité ouverte (4) qui peut être immergée dans un récipient (5) contenant du lait,
une première conduite (6) pour fournir la vapeur, laquelle conduite est raccordée entre la bouilloire (2) et les moyens de direction (3),
un élément de coupure (11) qui est positionné dans la première conduite,
un compresseur (7) pour produire de l'air comprimé,
un moteur (8) pour actionner le compresseur (7),
une deuxième conduite (9), pour fournir l'air comprimé, laquelle conduite est raccordée entre le compresseur (7) pour l'air comprimé et les moyens de direction (3),
un élément (12) qui est sensible à la température et qui est associé à l'extrémité immersible (4) des moyens de direction (3) afin de détecter la température du lait dans le récipient (5),
une unité de commande (10) qui est raccordée à l'élément de coupure (11), au compresseur (7) qui produit de l'air comprimé et à l'élément (12) qui est sensible à la température du lait, l'unité de commande (10) étant programmable afin de commander l'ouverture et la fermeture de l'élément de coupure (11) et pour actionner le compresseur (7) pour l'air comprimé, selon la température et/ou le moussage désirés du lait, **caractérisé en ce que** l'unité de commande est configurée pour actionner le compresseur (7) pour l'air comprimé d'une manière intermittente, en produisant des impulsions d'air comprimé pendant des périodes de temps prédéterminées qui sont alternées avec des périodes inactives.

7. Dispositif selon la revendication 6, où les périodes inactives ont une durée variable.

8. Dispositif selon les revendications 6 et 7, où les périodes de temps des impulsions d'air comprimé ont une durée qui est constante et égale durant la distribution de l'écoulement d'air comprimé.
